# EUROPÄISCHE PATENTSCHRIFT

(11) **EP 3 513 997 B1**
(45) Veröffentlichungstag und Bekanntmachung des Hinweises auf die Patenterteilung: **23.12.2020**
(21) Anmeldenummer: 19152565.8
(22) Anmeldetag: 18.01.2019
(51) Int. Cl.: B60K 17/35, B60K 17/348

(54) **FAHRZEUG MIT EINER ANORDNUNG ZUR DYNAMISCHEN ANPASSUNG DES VORLAUFS**
VEHICLE WITH AN ARRANGEMENT FOR DYNAMICALLY ADJUSTING FORWARD MOTION
VÉHICULE DOTÉ D'UN DISPOSITIF DE RÉGLAGE DYNAMIQUE DE L'AVANCE

(30) Priorität: 22.01.2018 DE 102018200953
(43) Veröffentlichungstag der Anmeldung: 24.07.2019
(73) Patentinhaber: Deere & Company, Moline, IL 61265 (US)
(72) Erfinder: Lang, Matthias, 68163 Mannheim (DE); Gugel, Rainer, 68163 Mannheim (DE); Müller, David, 68163 Mannheim (DE)
(74) Vertreter: Lavall, Christian Henner

(56) Entgegenhaltungen:
- DE-A1- 4 108 647
- DE-A1-102013 021 224
- DE-A1-102013 224 383

## Beschreibung

Die Erfindung betrifft landwirtschaftliches Fahrzeug mit einen Verbrennungsmotor zum Allradantrieb einer Vorderachse und einer Hinterachse, wobei das Fahrzeug eine Anordnung zur dynamischen Anpassung des Vorlaufs aufweist.

Die derzeit häufigste herkömmliche Variante eines Allradantriebs nach dem Stand der Technik besteht aus einem Verbrennungsmotor, dessen Leistung auf mehrere Achsen und Räder verteilt werden soll. Herkömmliche Allradantriebe kann man in zwei Grundtypen einteilen.

Bei dem ersten herkömmlichen Grundtyp handelt es sich um differenzialgesteuerte oder permanente Allradantriebe. Diese besitzen ein Zentraldifferential (auch: Längsdifferenzial, Mittendifferenzial), welches die Antriebsleistung permanent auf beide Achsen aufteilt und manchmal als Sperrdifferenzial ausgeführt ist. Das Zentraldifferenzial ist bei herkömmlichen Varianten nach den Stand der Technik häufig ein Planetengetriebe, gelegentlich auch als Differenzial ausgeführt, da dies ein spezielles Planetengetriebe mit einer 50:50-Drehmoment-Aufteilung ist. Alternativ können auch Differenziale ohne Verzahnung, wie zum Beispiel Gleitsteindifferenziale, eingesetzt werden.

Bei dem zweiten herkömmlichen Grundtyp nach dem Stand der Technik handelt es sich um Kupplungsgesteuerte Allradantriebe. Bei diesen Systemen wird eine Achse permanent angetrieben, die andere Achse wird nur unter bestimmten Voraussetzungen über eine Kupplung mit Antriebsleistung versorgt. Die Kupplung selbst kann eine einfache Klauenkupplung, eine Visco-Kupplung, eine Fliehkraftkupplung oder eine elektronisch gesteuerte Reiblamellenkupplung sein.

Bei Fahrzeugen mit permanentem Allradantrieb wird die Motorleistung ständig auf alle vier Räder übertragen und durch die Differenziale wird der vollständige Drehzahlausgleich ohne Leistungsverluste gewährleistet. Um Verspannungen im Antriebsstrang zu vermeiden, wird häufig ein zusätzliches Zentraldifferenzial zwischen Vorder- und Hinterachse eingebaut. Der Nachteil hierbei ist jedoch, dass bei fehlender Bodenhaftung eines einzelnen Rades oder einer Achse das übertragbare Antriebsmoment durch dieses Rad oder diese Achse begrenzt wird, wodurch ein Fahrzeug im Extremfall nicht mehr aus eigener Kraft bewegt werden kann. Aus diesem Grund wird bei Fahrzeugen mit permanentem Allradantrieb häufig entweder das Zentraldifferenzial als Sperrdifferenzial ausgeführt oder es kommen elektronische Traktionshilfen zum Einsatz.

Durch die Bauart des Zentraldifferenzials kann das Antriebsmoment gleichmäßig (50:50) oder auch ungleichmäßig auf beide Achsen aufgeteilt werden. Die Wahl der Verteilung bestimmt das Fahrverhalten maßgeblich. Da an Steigungen und beim Beschleunigen durch die dynamische Achslastverschiebung zusätzlich Gewicht auf die Hinterachse verlagert wird, ist es üblich, auch beim Antriebsmoment einen höheren Anteil auf die Hinterachse zu übertragen. Daher werden in vielen Fahrzeugen die Drehmoment-Aufteilungen zwischen Vorderachse und Hinterachse von 45:55 (V:H) bis 33:67 gewählt. Diese Verteilung ist zunächst zwar festgelegt, wird aber durch die Sperre des Zentraldifferenzials wieder erweitert. Bei einem Zentraldifferenzial mit elektronischer Reiblamellenkupplung können sich durch äußere Gegebenheiten sogar Kraftverteilungen von 100 : 0 und 0 : 100 einstellen.

Mittels einer Antriebswelle wird das Drehmoment auf ein Hauptgetriebe übertragen, welches durch eine Abtriebswelle mit einem Differential in Verbindung steht. Das Differential verteilt das bereitgestellte Drehmoment zum Antreiben einer oder beider Fahrzeugachsen auf diese. Zwischen dem Differential und der ersten Fahrzeugachse ist ein Getriebe zur Einstellung eines Drehmoment- und/oder eines Drehzahlverhältnisses zwischen den angetriebenen Fahrzeugachsen angeordnet.

Eine starre Kopplung der Antriebsachsen bei allradgetriebenen landwirtschaftlichen Fahrzeugen, wie beispielsweise Traktoren mit Achsschenkellenkung, führt bei Kurvenfahrt zu einem ungünstigen Fahrverhalten. Die größere Geschwindigkeit der Vorderräder beim Kurvenfahren wegen des weiteren Spurkreises der Vorderachse ist besonders bei der fast ausschließlich verwendeten Achsschenkel-Lenkung problematisch. Gerade bei Traktoren mit den relativ kurzen Radständen und der für verschiedene Arbeiten unabdingbaren Wendigkeit müssen daher Lösungen gefunden werden.

Der Quotient aus der mittleren Radumfangsgeschwindigkeit der Vorder- und Hinterräder ist eine gebräuchliche Größe zur Beschreibung der Abrollkinematik. Bei einem Verhältnis größer als 1 spricht man von Vorlauf oder auch Voreilung der Vorderräder. Der Vorlaufbedarf bei Kurvenfahrt kann abgeschätzt werden. So kann beispielsweise mit Hilfe von Federkennlinien der Reifen in einer rechnerischen Modellierung der praxisrelevante Bereich für den statischen Vorlauf auf ermittelt werden.

Wegen der geforderten Rangierbarkeit wurden die Radeinschlagwinkel mit immer weiter verfeinerten Außenantriebsgelenken bis zu 50 Grad gesteigert. Bei diesem maximalen Einschlagwinkel drehen die Vorderräder fast 30 Prozent schneller als die Hinterräder. Bei starren Allradantrieben treten bei dieser Drehzahldifferenz unerlaubt hohe Blindmomente mit reduzierter Zugleistung und erhöhtem Verschleiß auf.

Es besteht die Möglichkeit, der manuellen oder automatischen Abschaltung des Vorderradantriebs beim Befahren enger Kurvenradien. Hierbei nimmt dementsprechend die zur Verfügung stehende Zugkraft der Vorderachse in Kurven ab.

Es ist eine Anpassung der Vorderachsgeschwindigkeit beim Kurvenfahren bekannt, bei der die Vorderachse bei Geradeausfahrt und bei kleineren Lenkwinkeln über eine geschlossene Klauenkupplung mit einer bestimmten Übersetzung angetrieben wird. Bei größeren Lenkwinkeln über 40 Grad wird die Klauenkupplung geöffnet und eine Lamellenkupplung geschlossen, die nunmehr die Vorderräder über eine höhere Übersetzung schneller antreibt.

Es ist bekannt, dass der Wechsel der Übersetzung zur Vorderachse vollautomatisch erfolgt. Nachteilig bei dieser Lösung ist, dass die exakte Drehzahlanpassung der Vorderachse beim Kurvenfahren nur in zwei Auslegungspunkten vorgenommen wird. In den anderen Bereichen werden zwar reduzierte, aber doch signifikante Blindmomente erzeugt.

Es ist ebenfalls bekannt, durch den Einsatz eines hydrostatisches Überlagerungsgetriebes, die richtige Drehzahl der Vorderräder für alle Kurvenradien und Schlupfbedingungen optimal einzustellen.

Die DE 10 2015 114 055 A1 beschreibt ein landwirtschaftliches Fahrzeug mit einem Verbrennungsmotor, welcher mittels einer Antriebswelle ein Drehmoment auf ein Hauptgetriebe überträgt. Das Hauptgetriebe steht über eine Abtriebswelle mit einem Differential in Verbindung. Das Differential verteilt das Drehmoment zum Antreiben einer oder beider Fahrzeugachsen. Zwischen dem Differential und der ersten Fahrzeugachse ist ein Getriebe zur Einstellung eines Drehmoment- und/oder eines Drehzahlverhältnisses zwischen den angetriebenen Fahrzeugachsen angeordnet. Das Getriebe ist als ein stufenloses Getriebe ausgeführt.

Die DE 10 2005 044 181 A1 offenbart ein Antriebssystem für einen Traktor. Das Antriebssystem umfasst mindestens einen elektrischen Generator, sowie eine erste und zweite elektrische Maschine. Mit einem vom Motor erzeugten Drehmoment wird ein elektrische Generator angetrieben. Mit der vom elektrischen Generator erzeugten elektrischen Energie wird eine der beiden elektrischen Maschinen angetrieben. Das von der ersten und/oder der zweiten elektrischen Maschine erzeugte mechanische Drehmoment ist auf mindestens eine Antriebsachse des Fahrzeugs zu dessen Fortbewegung übertragbar. In einer bevorzugten Ausführungsform ist eine Antriebsachse lediglich von einer elektrischen Maschine antreibbar und eine andere Antriebsachse lediglich von der anderen elektrischen Maschine antreibbar. Hierdurch können die Räder der Vorderachse mit einer anderen Radumfangs-geschwindigkeit als die Räder der Hinterachse betrieben werden. Durch eine Erhöhung des Vorlaufs der Räder der Vorderachse kann der Wendekreis des Traktors verkleinert werden.

In der DE 10 2013 224 383 A1 wird ein leistungsverzweigter Achsantrieb beschrieben. Dieser umfasst ein Hauptantriebselement, zwei Zusatzantriebselemente, zwei Fahrzeugachsen und ein Hauptgetriebe. Ein leistungsverzweigter Achsantrieb weist ein Leistungsverzweigungsgetriebe auf. Ein Zusatzantriebselement wirkt auf das Leistungsverzweigungsgetriebe ein. Dadurch ist der Vorlauf der zweiten Fahrzeugachse regelbar.

Die DE 10 2015 209 244 A1 beschreibt ein Verfahren, bei dem durch Beaufschlagung der Synchron-Soll Drehzahl mit einem vordefinierten Differenz-Korrekturfaktor die Soll-Drehzahl einer zweiten Achse gezielt relativ zur Ist-Drehzahl der ersten Achse eingestellt werden kann. Dadurch kann ein Vorlauf eingestellt werden.

Die DE 10 2013 226 592 A1 betrifft ein Verfahren zur Reduzierung des Vorlaufs mittels einer Reifendruckregelanlage. Dabei wird der Luftdruck der Vorderachse verringert und der Luftdruck der Hinterachse erhöht. Auf diese Weise kann der Vorlauf reduziert werden, indem durch Anpassen der Radabmessungen die translatorischen Geschwindigkeiten der Räder an der ersten Achse und der zweiten Achse einander angeglichen werden. Aufgabe der Erfindung ist es, ein landwirtschaftliches Fahrzeug mit einem Allradantrieb weiterzuentwickeln.

Diese Aufgabe wird erfindungsgemäß durch ein landwirtschaftliches Fahrzeug gemäß dem Hauptanspruch gelöst. Bevorzugte Varianten sind den Unteransprüchen, der Beschreibung und den Zeichnungen zu entnehmen. Erfindungsgemäß weist das Fahrzeug eine Anordnung zur dynamischen Anpassung des Vorlaufs einer Achse auf. Diese Möglichkeit einer dynamischen Anpassung während des Fahrbetriebes bringt erhebliche Vorteile gegenüber herkömmlichen Fahrzeugen mit einem starren Übersetzungsverhältnis mit sich. Es ist möglich, die Vorderachse flexibel mit einer unterschiedlichen Drehzahl als die Hinterachse zu betreiben. Durch eine unterschiedliche Drehzahl kann das Kurvenfahrverhalten aktiv beeinflusst werden, so dass ein kleinerer Kurvenradius eingehalten werden kann. Das erfindungsgemäße Fahrzeug ermöglicht es auch, dass beispielsweise bei einer Geradeausfahrt kein Vorlauf vorhanden ist und nur bei einer Kurvenfahrt ein Vorlauf vorgenommen wird.

Erfindungsgemäß wird ein magnetisches Summiergetriebe zur dynamische Anpassung des Vorlaufs eingesetzt. Solche magnetischen Summiergetriebe sind prinzipiell beispielsweise aus der DE 10 2013 021 224 A1 bekannt. Der Einsatz eines solchen magnetischen Summiergetriebes zur dynamischen Einstellung des Vorlaufs hat beispielsweise gegenüber dem Einsatz von mechanischen Summiergetrieben große Vorteile. Mechanische Überlagerungsgetriebe, die diese Funktion erfüllen, müssten sehr hohe Übersetzungsverhältnisse erreichen und zusätzlich Sicherheitseinrichtungen zum Schutz vor Überdrehzahl bei schnellen engen Kurven implementieren, was einen sehr hohen konstruktiven Aufwand und damit hohe Kosten nach sich zieht. Dagegen kann das magnetische Summiergetriebe in einer Stufe hohe Übersetzungsverhältnisse realisieren und weist eine inhärente Sicherheit gegen Überbelastung, beispielsweise einer Überdrehzahl auf, die keiner zusätzlich konstruktiv zu realisierenden schaltbaren trennbaren Verbindung bedarf.

Bei dem Summiergetriebe sind mindestens zwei Getriebeelemente magnetisch miteinander gekoppelt. Bei einer besonders vorteilhaften Variante der Erfindung ist ein drittes Getriebeelement ebenfalls mit zumindest einem der beiden anderen Getriebeelemente magnetisch gekoppelt.

Eine Übertragung eines Moments zwischen den Getriebeelementen erfolgt über magnetische Felder. Dabei wird durch eine Rotation eines Getriebeelements ein rotierendes Magnetfeld erzeugt, welches dann eine Kraftwirkung auf ein anderes Getriebeelement ausübt. Eine Übertragung eines Moments innerhalb des Summiergetriebes erfolgt kontaktfrei.

Bei einer Variante der Erfindung ist das erste Getriebeelement als ein Innenring ausgebildet. Es umfasst Magnetelemente die vorzugsweise als Permanentmagnete ausgebildet sind. Diese sind vorzugsweise in einem rechten Winkel zu der Hauptrotationsachse des Summiergetriebes ausgerichtet.

Als besonders günstig erweist es sich, wenn das zweite Getriebeelement als ein Mittelring ausgebildet ist. Dabei umschließt das als Mittelring ausgebildete zweite Getriebeelement das erste, als Innenring ausgebildete Getriebeelement. Das zweite Getriebeelement umfasst magnetisch leitende Elemente und magnetisch nichtleitende Elemente, die jeweils abwechselnd angeordnet sind.

Bei einer vorteilhaften Variante der Erfindung ist das dritte Getriebeelement als ein Außenring ausgebildet. Das als Außenring ausgebildete Getriebeelement ist radial außerhalb des als Mittelring ausgebildeten zweiten Getriebeelements angeordnet. Das als Außenring ausgebildete, dritte Getriebeelement umfasst Magnetelemente, die in einer Radialrichtung ausgerichtet sind.

Das landwirtschaftliche Fahrzeug umfasst vorzugsweise eine Einrichtung, mit der die auf die Vorderachse und Hinterachse übertragenen Drehmomente variiert werden können, wenn es beispielsweise in Folge von Schlupf zu einem Traktionsverlust kommt. Die Einrichtung kann die Relativdrehzahl einzelner Komponenten des magnetischen Summiergetriebes regeln. Es kann die Summierung von elektrischer und mechanischer Leistung eingestellt werden. Durch die Einrichtung kann die Leistungsverteilung zwischen der Vorder- und der Hinterachse gezielt geregelt werden. Es ist somit möglich, eine flexible Leistungsverteilung zu realisieren, die an den aktuellen Lastfall angepasst ist. Dies kann beispielsweise durch das Einstellen der Relativdrehzahlen des magnetischen Summiergetriebes erfolgen.

Mit der Anordnung zur dynamischen Anpassung des Vorlaufs einer Achse kann die Antriebsleistung in Form von elektrischer und von mechanischer Leistung an eine Achse, vorzugsweise die Vorderachse, geleitet werden. Dabei überlagern sich beide Leistungspfade im magnetischen Summiergetriebe. Es kann auch eine Boostfunktion integriert werden, welche im Bedarfsfall über die elektrische Maschine eine zusätzliche kurzzeitig erhöhte elektrische Leistung auf die Vorderachse leitet. Die Boostfunktion erfolgt auf dem elektrischen Leistungspfad. Die Boostfunktion ermöglicht es, im Fall von kurzfristig benötigter Antriebsleistung, einen zusätzlichen Anteil der Leistung über den elektrischen Leistungspfad hinzuzufügen.

Bei einer Ausführung der Erfindung können der Generator und wenigstens eine elektrische Maschine mit wenigstens einem Energiespeicher, einem Akkumulator oder einer Batterie verbunden sein. Durch das Verbinden kann der Generator den Energiespeicher aufladen und elektrische Energie für eine spätere Verwendung speichern. In einem Betriebsmodus, in dem nur eine geringe elektrische Leistung im Abtrieb benötigt wird, kann daher die elektrische Leistung wenigstens teilweise in den Energiespeicher, den Akkumulator oder die Batterie geleitet werden. Diese steht für einen späteren Abruf bei Leistungsbedarf zur Verfügung.

Bei einer Variante der Erfindung kann die Anordnung derart ausgelegt sein, dass bei einem Bremsvorgang eine Rekuperation der Antriebsleistung erfolgt. Es kann ein Anteil der durch den Bremsvorgang anfallenden Leistung mittels der elektrischen Maschine wieder in elektrischen Strom umgewandelt werden. Die elektrische Maschine erzeugt im Generatormodus Strom, der an den Energiespeicher weitergeleitet wird. Somit steht ein Teil der Bremsleistung zu einem späteren Zeitpunkt erneut zur Verfügung.

Bei einer weiteren Ausführung werden wenigstens zwei elektrische Maschinen eingesetzt. Dies ermöglicht es beide Vorderräder mit unterschiedlichen Drehzahlen oder unterschiedlichen Drehmomenten zu betreiben. Dadurch kann ein Vorderrad gezielt gebremst oder beschleunigt werden. Dieses Verfahren kann zur Stabilisierung des Fahrzeugs bei kritischen Fahrzuständen eingesetzt werden.

In einer weiteren Ausführung ist die Antriebsleistungsaufteilung auf die Abtriebsmittel der Vorder- und der Hinterachse regulierbar. Die Aufteilung der Antriebsleistung erlaubt über den Vierradantrieb hinaus die Stabilisierung des Fahrzeugs. Bei unterschiedlichem Untergrund mit wechselndem Rad-Boden-Kontakt, wie etwa Erdreich, und bei unterschiedlichen Steigungen, kann eine verbesserte Zugleistung des Fahrzeugs erreicht werden.

Weitere Merkmale und Vorteile der Erfindung ergeben sich aus der Beschreibung von Ausführungsbeispielen anhand von Figuren und aus den Figuren selbst.

Dabei zeigt
Figur 1 eine schematische Darstellung eines landwirtschaftlichen Fahrzeugs,
Figur 2 eine schematische Darstellung eines Antriebsstrangs mit einer Anordnung zur dynamischen Anpassung des Vorlaufs,
Figur 3 eine schematische Darstellung eines magnetischen Summiergetriebes.

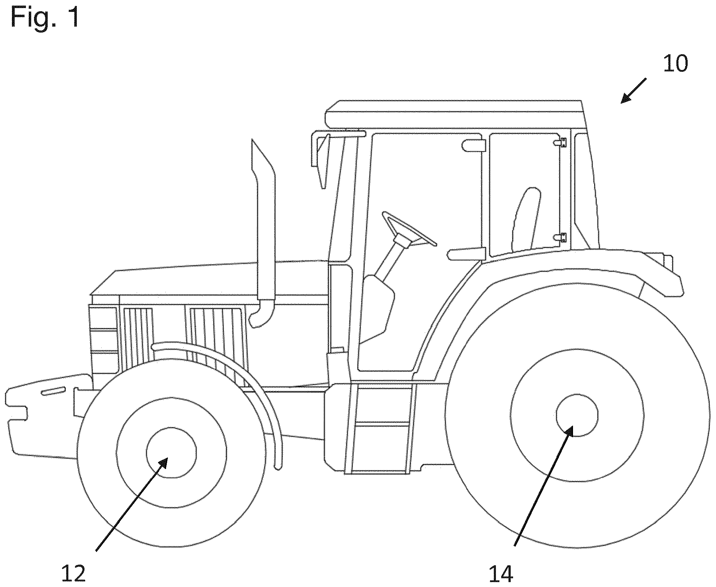

Figur 1 zeigt ein landwirtschaftliches Fahrzeug 10, welches im Ausführungsbeispiel als Traktor ausgeführt ist mit einer Vorderachse 12 und einer Hinterachse 14. An den Achsen 12, 14 befinden sich Räder, jedoch können statt Rädern auch Ketten- oder Raupenantriebe zur Anwendung kommen.

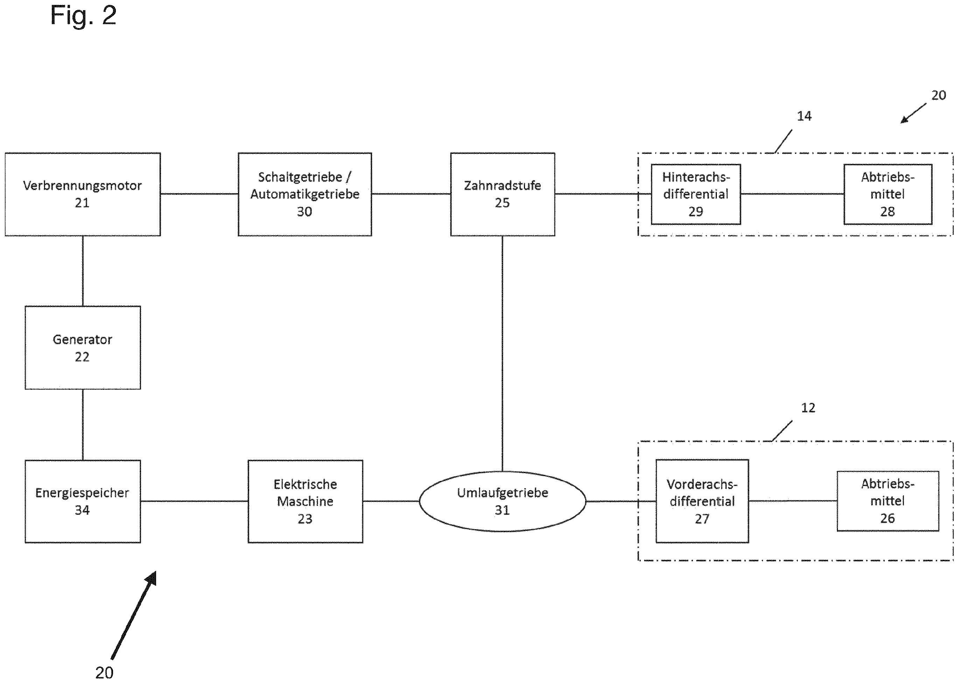

Figur 2 zeigt eine schematische Darstellung eines Antriebsstrangsystems mit einer Anordnung 20 zur dynamischen Anpassung des Vorlaufs.

Die Vorderachse 12 und die Hinterachse 14 können über einen mechanischen Leistungspfad angetrieben werden. Dabei wird die mechanisch erzeugte Leistung eines Verbrennungsmotors 21 mittels eines Schalt-/Automatikgetriebes 30, einem Vorderachsdifferential 27 und einem Hinterachsdifferential 29 zugeleitet.

Erfindungsgemäß werden die Vorderräder zusätzlich mit einer auf elektrischem Wege erzeugten Leistung beaufschlagt. Hierfür ist ein Generator 22 vorgesehen, der mit dem Verbrennungsmotor 21 verbunden ist. Durch die Antriebsleistung des Verbrennungsmotors 21 erzeugt der Generator 22 elektrischen Strom, welcher dann für eine zusätzliche Leistungsbeaufschlagung der Vorderachse 12 zur Verfügung gestellt wird.

Bei einer Variante der Erfindung kann der elektrische Strom zunächst in einem Energiespeicher 34 gespeichert werden. Es kann jedoch auch vorgesehen sein, keinen Energiespeicher 34 unterzubringen, so dass der elektrische Strom vom Generator 22 direkt zur Leistungserzeugung genutzt wird.

Der elektrische Strom wird vom Generator 22 oder vom Energiespeicher 34 an eine elektrische Maschine 23 weitergeleitet. Die elektrische Maschine 23 erzeugt aus dem elektrischen Strom Antriebsleistung. Erfindungsgemäß kann die Vorderachse 12 zusätzlich zu der Leistung des mechanischen Pfades mit einer Leistung aus dem elektrischen Pfad beaufschlagt werden.

Das Schalt- oder Automatikgetriebe 30 dient dazu, die Leistung bezüglich Drehmoment bzw. Drehzahl an den Bedarfsfall anzupassen. Durch eine Zahnradstufe 25 kann die mechanisch erzeugte Leistung des Verbrennungsmotors 21 auf einen Vorderachs- und/oder Hinterachsantrieb aufgeteilt werden.

Der Antrieb der Hinterachse 14 weist im Ausführungsbeispiel ein Hinterachsdifferential 29 auf, an das die Abtriebsmittel 28 der Hinterachse angeschlossen sind. Dabei können die Abtriebsmittel aus einem Differenzialgetriebe, einem Planetengetriebe oder einem Umlaufrädergetriebe bestehen, und dienen dazu, die Drehzahl und/oder das Drehmoment nochmals zu modifizieren, bevor es an die Räder geleitet wird.

Der Leistungspfad für die Vorderachse 12 weist erfindungsgemäß ein magnetisches Summiergetriebe 31 auf, das die Leistung aus dem mechanischen und dem elektrischen Pfad bündelt und an ein Vorderachsdifferential 27 leitet. Ausgehend vom Vorderachsdifferential 27 wird die Leistung an die Abtriebsmittel 26 der Vorderachse weitergeleitet. Diese haben die gleiche Funktion wie die Abtriebsmittel 28 der Hinterachse.

Die elektrische Maschine 23 ist auf ihrer mechanischen Seite mit dem magnetischen Summiergetriebe 31 verbunden. In dem magnetischen Summiergetriebe 31 wird der mechanische Leistungspfad mit dem elektrischen Leistungspfad addiert und an die Vorderachse 12 geleitet.

Durch die Anordnung 20 zur dynamischen Anpassung des Vorlaufs ist es möglich, je nach Bedarfsfall zusätzlich die Leistung aus dem elektrischen Pfad zu dosieren. Die elektrische Maschine 23 wird durch eine nicht dargestellte Einrichtung gesteuert, so dass die elektrische Maschine 23 durch ihren elektrischen Antrieb das magnetische Summiergetriebe 31 derart beeinflussen kann, dass die Leistung bedarfsgerecht summiert wird. Je nach Drehzahlunterschied der einzelnen Elemente des magnetischen Summiergetriebes 31 kann der Faktor der Summierung bestimmt werden.

Die Einrichtung zur Steuerung und/oder Regelung kann auch dazu verwendet werden, den Generator 22 zu steuern, so dass dieser je nach Bedarfsfall zu bzw. abgeschaltet werden kann.

Durch den elektrischen Leistungspfad kann mithilfe der Einrichtung zur Steuerung und/oder Regelung im Bedarfsfall zusätzliche elektrische Leistung auf die Vorderachse 12 geleitet werden. Der elektrische Leistungspfad führt nicht über das Getriebe 30, sodass dieses durch die summierte Leistung nicht belastet wird.

Durch die Steuerung des magnetischen Summiergetriebes 31 kann auch eine Leistungsverteilung zwischen der Vorderachse 12 und der Hinterachse 14 erreicht werden. Durch die aktive Steuerung des magnetischen Summiergetriebes 31 kann die Leistung von der Vorderachse 12 auf die Hinterachse 14 umverteilt werden. Die Leistungsverteilung zwischen der Vorder- und der Hinterachse 12, 14 kann bedarfsgerecht gesteuert sein.

Durch die zusätzliche elektrische Leistung wird die Vorderachse 12 mit einem Vorlauf ausgestattet. Die Abtriebsmittel der Vorderachse 12 drehen dabei mit einer höheren oder niedrigeren Drehzahl als diejenigen der Hinterachse 14. Das Fahrzeug 10 weist bei Kurvenfahrt ein besseres Ansprechverhalten auf.

Beim Abbremsvorgang kann ein Anteil der Leistung durch die elektrische Maschine 23 im Generatorbetrieb in elektrischen Strom gewandelt und im Energiespeicher 34 gespeichert werden.

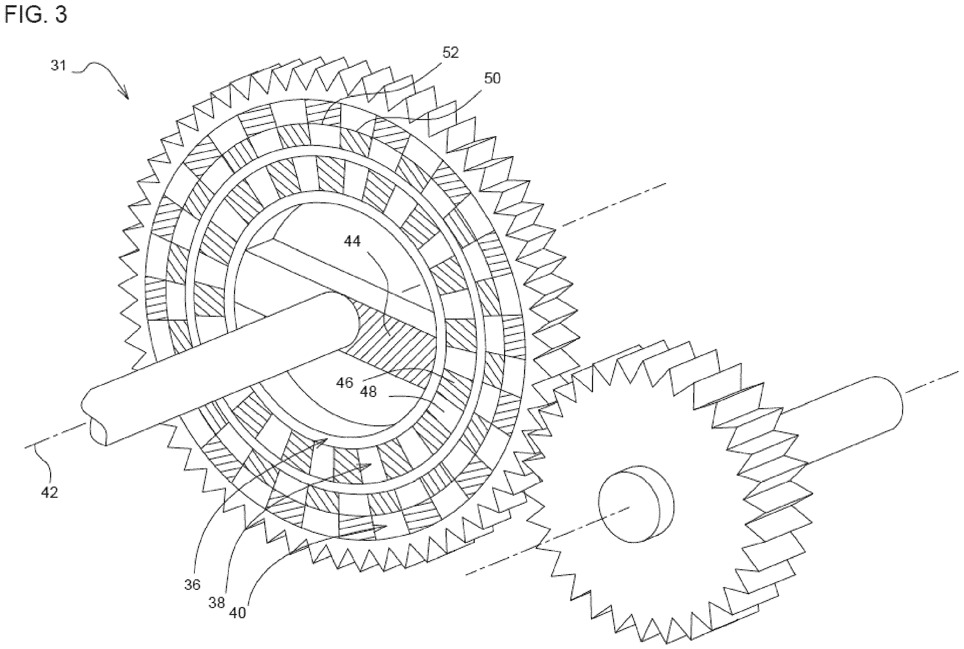

Figur 3 zeigt eine schematische Darstellung des magnetischen Summiergetriebes 31. Das Summiergetriebe 31 umfasst ein erstes Getriebeelement 36, ein zweites Getriebeelement 38 und ein drittes Getriebeelement 40, die magnetisch miteinander gekoppelt sind. Eine Übertragung eines Moments zwischen den Getriebeelementen 36, 38 und 40 erfolgt über magnetische Felder. Dabei wird durch eine Rotation eines Getriebeelements 36, 38, 40 ein rotierendes Magnetfeld erzeugt, welches dann eine Kraftwirkung auf ein anderes Getriebeelement 36, 38, 40 ausübt. Eine Übertragung eines Moments innerhalb des magnetischen Summiergetriebes 31 erfolgt kontaktfrei.

Das erste Getriebeelement 36 ist als ein Innenring ausgebildet. Das Getriebeelement 36 ist koaxial zu einer Hauptrotationsachse 42 des magnetischen Summiergetriebes 31 angeordnet. Das erste, als Innenring ausgebildete Getriebeelement 36 umfasst ein Magnetelement 44. Das Magnetelement 44 ist im Ausführungsbeispiel als ein Permanentmagnet ausgebildet, vorzugsweise als Stabmagnet. Das Magnetelement 44 ist in einem rechten Winkel zu der Hauptrotationsachse 42 ausgerichtet. Das Magnetelement 44 weist dabei einen Nordpol und einen Südpol auf. Dabei ist der Nordpol an einem radialen Ende des Magnetelements 44 und der Südpol an einem gegenüberliegenden radialen Ende angeordnet.

Das zweite Getriebeelement 38 ist als Mittelring ausgebildet und umschließt das erste, als Innenring ausgebildete, Getriebeelement 36 in einer Umfangsrichtung komplett.

Das zweite Getriebeelement 38 umfasst magnetisch leitende Elemente 46 und magnetisch nichtleitende Elemente 48. Die magnetisch leitenden Elemente 46 und die magnetisch nichtleitenden Elemente 48 sind abwechselnd angeordnet. Die magnetisch leitenden Elemente 46 und die magnetisch nichtleitenden Elemente 48 sind fest miteinander verbunden.

Das dritte Getriebeelement 40 ist als ein Außenring ausgebildet. Das Getriebeelement 40 ist radial außerhalb des als Mittelring ausgebildeten zweiten Getriebeelements 38 angeordnet. Das dritte Getriebeelement 40 umfasst Magnetelemente 50, 52. Die Magnetelemente 50, 52 sind in das als Außenring ausgebildete Getriebeelement 40 fest integriert.

Die Magnetelemente 50, 52 sind dabei über die gesamten 360 Grad des ringförmig ausgebildeten Getriebeelements 40 verteilt und in einer Radialrichtung ausgerichtet. Dabei liegen ein Nordpol und ein Südpol eines Magnetelements 50, 52 jeweils in einer imaginären Achse, die von der Hauptrotationsachse aus radial nach außen verläuft.

Eine Polarisierung zweier benachbarter Magnetelemente 50, 52 des dritten Getriebeelements 40 ist dabei umgekehrt. Dabei ist der Nordpol des einen Magnetelements 50 radial nach innen in Richtung der Hauptrotationsachse gerichtet, und der Nordpol des in Umfangsrichtung benachbarten Magnetelements 52 ist radial nach außen von der Hauptrotationsachse weggerichtet.

Äquivalent dazu ist dann der Südpol des einen Magnetelements 50 radial nach außen von der Hauptrotationsachse weggerichtet und der Südpol des in Umfangsrichtung benachbarten Magnetelements 52 ist radial nach innen in Richtung der Hauptrotationsachse gerichtet. Dabei sind alle Magnetelemente 50, 52 des dritten Getriebeelements 40 umgekehrt polarisiert zu dem benachbarten Magnetelemente 50, 52 angeordnet.

Die Magnetelemente 50, 52 des als Außenring ausgebildeten, dritten Getriebeelements 40 können als Permanentmagnete ausgebildet sein. Bei dieser Variante weist das magnetische Summiergetriebe 31 eine feste Übersetzung auf.

Bei einer bevorzugten Variante der Erfindung, die nicht in den Figuren dargestellt ist, sind die Magnetelemente 50, 52 als steuerbare Magnetspulen ausgebildet, so dass das magnetische Summiergetriebe 31 durch eine spezielle Ansteuerung eine variable Übersetzung ausbilden kann und somit eine stufenlose Variation des Vorlauf möglich ist.

## Patentansprüche

1. Landwirtschaftliches Fahrzeug (10) mit einem Verbrennungsmotor (21) zum Allradantrieb einer Vorderachse (12) und einer Hinterachse (14), wobei das Fahrzeug (10) eine Anordnung (20) zur dynamischen Anpassung des Vorlaufs einer Achse (12, 14) aufweist, wobei die Anordnung (20) eine elektrische Maschine (23) und ein Summiergetriebe (31) umfasst, das die Antriebskraft des Verbrennungsmotors (21) und der elektrischen Maschine (23) summiert, **dadurch gekennzeichnet, dass** das Summiergetriebe (31) mindestens zwei Getriebeelemente (36, 38, 40) aufweist, die magnetisch gekoppelt sind, wobei das Fahrzeug (10) eine Einrichtung aufweist, die dazu eingerichtet ist, das Übersetzungsverhältnis des Summiergetriebes (31) in Abhängigkeit von zumindest einem das Fahrverhalten beeinflussenden Faktor zu steuern und/oder zu regeln.

2. Landwirtschaftliches Fahrzeug nach Anspruch 1 , **dadurch gekennzeichnet, dass** das Summiergetriebe (31) ein erstes Getriebeelement (36) zur Anbindung des Verbrennungsmotors (21), ein zweites Getriebeelement (38) zur Anbindung der elektrischen Maschine (23) und ein drittes Getriebeelement (40) als Ausgangselement aufweist.

3. Landwirtschaftliches Fahrzeug nach Anspruch 2, **dadurch gekennzeichnet, dass** das dritte Getriebeelement (40) mit einen Vorderachsdifferential (27) verbunden ist.

4. Landwirtschaftliches Fahrzeug nach einem der Ansprüche 1 bis 3, **dadurch gekennzeichnet, dass** ein Getriebeelement (36) als Innenring, ein Getriebeelement (40) als Außenring und ein Getriebeelement (38) als Mittelring ausgebildet ist, wobei die Getriebeelemente (36, 38, 40) jeweils magnetisch miteinander gekoppelt sind.

5. Landwirtschaftliches Fahrzeug nach Anspruch 4, **dadurch gekennzeichnet, dass** die elektrische Maschine (23) unmittelbar um den Außenring angeordnet ist.

6. Landwirtschaftliches Fahrzeug nach einen der Ansprüche 4 oder 5, **dadurch gekennzeichnet, dass** das als Außenring ausgebildete Getriebeelement (40) als ein Eingangsrad eines Differentialgetriebes ausgeführt ist.

7. Landwirtschaftliches Fahrzeug nach einem der Ansprüche 4 bis 6, **dadurch gekennzeichnet, dass** das als Außenring ausgebildete Getriebeelement (40) Magnetelemente (50, 52) aufweist.

8. Landwirtschaftliches Fahrzeug nach einem der Ansprüche 4 bis 7, **dadurch gekennzeichnet, dass** das als Außenring ausgebildete Getriebeelement (40) ein magnetisches Feld mit Spulen erzeugt,

9. Landwirtschaftliches Fahrzeug nach einem der Ansprüche 1 bis 8, **dadurch gekennzeichnet, dass** die Anordnung (20), die zum Betrieb der elektrischen Maschine (23) nötige Energie in einem elektrischen Generator (22) erzeugt und ohne Zwischenspeicher an die elektrische Maschine (21) leitet.

10. Landwirtschaftliches Fahrzeug nach einem der Ansprüche 1 bis 9, **dadurch gekennzeichnet, dass** die Einrichtung dazu eingerichtet ist, ein Signal auszuwerten, welches den Fahrmodus des landwirtschaftlichen Fahrzeugs (10) repräsentiert.

## Claims

1. Agricultural vehicle (10) having a combustion engine (21) for all-wheel drive of a front axle (12) and a rear axle (14), wherein the vehicle (10) has an arrangement (20) for the dynamic adaptation of the leading of an axle (12, 14), wherein the arrangement (20) comprises an electric machine (23) and a summing gear mechanism (31) that totals the drive force of the combustion engine (21) and of the electric machine (23), **characterized in that** the summing gear mechanism (31) has at least two gear elements (36, 38, 40) that are coupled magnetically, wherein the vehicle (10) has a device that is set up to control and/or regulate the transmission ratio of the summing gear mechanism (31) depending on at least one factor influencing the driving behaviour.

2. Agricultural vehicle according to Claim 1, **characterized in that** the summing gear mechanism (31) has a first gear element (36) for connecting the combustion engine (21), a second gear element (38) for connecting the electric machine (23), and a third gear element (40) as output element.

3. Agricultural vehicle according to Claim 2, **characterized in that** the third gear element (40) is connected to a front-axis differential (27).

4. Agricultural vehicle according to one of Claims 1 to 3, **characterized in that** one gear element (36) is in the form of an inner ring, one gear element (40) is in the form of an outer ring, and one gear element (38) is in the form of a middle ring, wherein the gear elements (36, 38, 40) are each connected together magnetically.

5. Agricultural vehicle according to Claim 4, **characterized in that** the electric machine (23) is arranged directly around the outer ring.

6. Agricultural vehicle according to either of Claims 4 and 5, **characterized in that** the gear element (40) in the form of an outer ring is embodied as an input gear of a differential gear mechanism.

7. Agricultural vehicle according to one of Claims 4 to 6, **characterized in that** the gear element (40) in the form of an outer ring has magnet elements (50, 52).

8. Agricultural vehicle according to one of Claims 4 to 7, **characterized in that** the gear element (40) in the form of an outer ring generates a magnetic field with coils.

9. Agricultural vehicle according to one of Claims 1 to 8, **characterized in that** the arrangement (20) generates the energy required for operation of the electric machine (23) in an electric generator (22) and passes it to the electric machine (21) without intermediate storage.

10. Agricultural vehicle according to one of Claims 1 to 9, **characterized in that** the device is set up to evaluate a signal that represents the driving mode of the agricultural vehicle (10).

## Revendications

1. Véhicule agricole (10) comprenant un moteur à combustion interne (21) pour la transmission intégrale d'un essieu avant (12) et d'un essieu arrière (14), le véhicule (10) présentant un agencement (20) d'adaptation dynamique de l'avance d'un essieu (12, 14), dans lequel l'agencement (20) comprend une machine électrique (23) et un engrenage sommateur (31) qui totalise la force d'entraînement du moteur à combustion interne (21) et de la machine électrique (23), **caractérisé en ce que** l'engrenage sommateur (31) présente au moins deux éléments d'engrenage (36, 38, 40) qui sont couplés magnétiquement, le véhicule (10) présentant un dispositif qui est conçu pour commander et/ou régler le rapport de transmission de l'engrenage sommateur (31) en fonction d'au moins un facteur affectant le comportement de conduite.

2. Véhicule agricole selon la revendication 1, **caractérisé en ce que** l'engrenage sommateur (31) présente un premier élément d'engrenage (36) pour la liaison avec le moteur à combustion interne (21), un deuxième élément d'engrenage (38) pour la liaison avec la machine électrique (23) et un troisième élément de liaison (40) comme élément de sortie.

3. Véhicule agricole selon la revendication 2, **caractérisé en ce que** le troisième élément d'engrenage (40) est relié à un différentiel d'essieu avant (27).

4. Véhicule agricole selon l'une quelconque des revendications 1 à 3, **caractérisé en ce qu'**un élément d'engrenage (36) est réalisé sous forme de bague intérieure, un élément d'engrenage (40) est réalisé sous forme de bague extérieure et un élément d'engrenage (38) est réalisé sous forme de bague intermédiaire, les éléments d'engrenage (36, 38, 40) étant respectivement couplés magnétiquement les uns aux autres.

5. Véhicule agricole selon la revendication 4, **caractérisé en ce que** la machine électrique (23) est disposée directement autour de la bague extérieure.

6. Véhicule agricole selon l'une quelconque des revendications 4 ou 5, **caractérisé en ce que** l'élément d'engrenage (40) réalisé sous forme de bague extérieure se présente sous la forme d'une roue d'entrée d'un engrenage différentiel.

7. Véhicule agricole selon l'une quelconque des revendications 4 à 6, **caractérisé en ce que** l'élément d'engrenage (40) réalisé sous forme de bague extérieure présente des éléments magnétiques (50, 52).

8. Véhicule agricole selon l'une quelconque des revendications 4 à 7, **caractérisé en ce que** l'élément d'engrenage (40) réalisé sous forme de bague extérieure produit un champ magnétique par des bobines d'excitation.

9. Véhicule agricole selon l'une quelconque des revendications 1 à 8, **caractérisé en ce que** l'agencement (20) produit dans un générateur électrique (22) l'énergie nécessaire au fonctionnement de la machine électrique (23) et la conduit sans stockage intermédiaire à la machine électrique (21).

10. Véhicule agricole selon l'une quelconque des revendications 1 à 9, **caractérisé en ce que** le dispositif est conçu pour évaluer un signal qui représente le mode de conduite du véhicule agricole (10).
